# EUROPÄISCHE PATENTANMELDUNG

(11) **EP 3 437 467 A1**
(43) Veröffentlichungstag der Anmeldung: **06.02.2019**
(21) Anmeldenummer: 18183818.6
(22) Anmeldetag: 17.07.2018
(51) Int. Cl.: A01K 1/015

(54) **TIEFBOXENEINLAGE**

(30) Priorität: 01.08.2017 DE 102017117387; 19.03.2018 DE 102018106293
(71) Anmelder: Gummiwerk KRAIBURG Elastik GmbH & Co. KG, 84529 Tittmoning (DE)
(72) Erfinder: Klinger, Martin, 84559 Kraiburg am Inn (DE); Stribl, Michael, 84550 Feichten (DE); Steinberger, Rupert, 84570 Polling (DE)
(74) Vertreter: Ruttensperger Lachnit Trossin Gomoll

(57) **Zusammenfassung**

Eine Tiefboxeneinlage (20) umfasst:
- einen ersten Einlagekörper (28) mit einer Boden-Auflageseite (32) zur Auflage des ersten Einlagekörpers (28) auf einem Tiefboxenboden (22) und einer ersten Einlagekörper-Auflageseite (34),
- einen zweiten Einlagekörper (30) mit einer zweiten Einlagekörper-Auflageseite (36) zur Auflage des zweiten Einlagekörpers (30) auf der ersten Einlagekörper-Auflageseite (34) des ersten Einlagekörpers (28) oder/und dem Tiefboxenboden (22) und einer Einstreumaterial-Auflageseite (38) zur Auflage von in eine Tiefbox (10) einzubringendem Einstreumaterial (26) auf dem zweiten Einlagekörper (30),
wobei der erste Einlagekörper (28) an seiner Boden-Auflageseite (32) eine Mehrzahl von in Richtung von der ersten Einlagekörper-Auflageseite (34) weg vorspringenden Boden-Auflagevorsprüngen (40) aufweist und der zweite Einlagekörper (30) an seiner Einstreumaterial-Auflageseite (38) eine Mehrzahl von in Richtung von der zweiten Einlagekörper-Auflageseite (36) weg vorspringenden Einstreumaterial-Auflagevorsprüngen (52) aufweist.

## Beschreibung

Die vorliegende Erfindung betrifft eine Tiefboxeneinlage für eine Tiefbox in einem Tierstall.

Aus der nachveröffentlichten deutschen Patentanmeldung DE 10 2016 113 915 ist eine Tiefbox bekannt, bei welcher auf einem Tiefboxenboden in einem von dem Tiefboxenboden und einer Tiefboxenbodenumrandung begrenzten Tiefboxeninnenraum Einstreumaterial eingebracht ist. Auf diesem Einstreumaterial kann ein Tier, zum Beispiel ein Rind, stehen bzw. liegen. Als Einstreumaterial wird im Allgemeinen ein Gemisch aus Stroh und Tierausscheidungen verwendet, das durch die andauernde Belastung durch ein in der Tiefbox stehendes bzw. liegendes Tier allmählich verdichtet wird. Im oberen, durch ein Tier unmittelbar kontaktierten Bereich wird dieses Einstreumaterial wiederholt erneuert.

Da vor allem in demjenigen Bereich, in welchem ein Tier in einer Tiefbox mit seinem Bugbereich positioniert sein wird bzw. liegen wird, beim Aufstehen und Hinlegen des Tiers das Einstreumaterial stark belastet wird und in diesem Bereich das Einstreumaterial aufgrund der dort im Allgemeinen nicht vorhandenen Tierausscheidungen weniger stark gebunden ist, als in einem Heckbereich einer Tiefbox, in welchem ein Hinterteil des Tiers positioniert sein wird, ist es aus dieser älteren deutschen Patentanmeldung bekannt, insbesondere im Frontbereich der Tiefbox auf dem Tiefboxenboden kuppelartig aufgebaute Tiefboxeneinlagen zu fixieren. Die aus vergleichsweise dünnem Gummimaterial und somit elastisch verformbar aufgebauten Tiefboxeneinlagen sind einerseits bei Belastung durch ein Tier nachgiebig und erhöhen somit den Komfort beim Hinlegen und beim Liegen eines Tiers. Ferner bilden diese Tiefboxeneinlagen Erhebungen auf dem Tiefboxenboden, welche aufgrund der mit dem Einstreumaterial entstehenden Verzahnung einen verbesserten Halt für das Einstreumaterial gewährleisten und somit das Verschieben des Einstreumaterials insbesondere beim Aufstehen und Hinlegen eines Tieres verhindern.

Es ist die Aufgabe der vorliegenden Erfindung, eine den Komfort für ein Tier weiter erhöhende Tiefboxeneinlage bereitzustellen.

Erfindungsgemäß wird diese Aufgabe gelöst durch eine Tiefboxeneinlage, umfassend:
- einen ersten Einlagekörper mit einer Boden-Auflageseite zur Auflage des ersten Einlagekörpers auf einem Tiefboxenboden und einer ersten Einlagekörper-Auflageseite,
- einen zweiten Einlagekörper mit einer zweiten Einlagekörper-Auflageseite zur Auflage des zweiten Einlagekörpers auf der ersten Einlagekörper-Auflageseite des ersten Einlagekörpers oder/und dem Tiefboxenboden und einer Einstreumaterial-Auflageseite zur Auflage von in eine Tiefbox einzubringendem Einstreumaterial auf dem zweiten Einlagekörper,
wobei der erste Einlagekörper an seiner Boden-Auflageseite eine Mehrzahl von in Richtung von der ersten Einlagekörper-Auflageseite weg vorspringenden Boden-Auflagevorsprüngen aufweist und der zweite Einlagekörper an seiner Einstreumaterial-Auflageseite eine Mehrzahl von in Richtung von der zweiten Einlagekörper-Auflageseite weg vorspringenden Einstreumaterial-Auflagevorsprüngen aufweist.

Die erfindungsgemäße Tiefboxeneinlage umfasst somit mehrere übereinander zu positionierende Einlagekörper, wobei einer der Einlagekörper in Kontakt mit dem Tiefboxenboden tritt und ein anderer der Einlagenkörper in Wechselwirkung mit dem in einer derartigen Tiefbox anzuordnenden Einstreumaterial tritt. Jeder dieser Einlagekörper kann für den Kontakt mit dem Boden einerseits bzw. dem Einstreumaterial andererseits optimiert ausgebildet werden.

Um eine über die Fläche verteilt möglichst gleichmäßige Auflagewechselwirkung mit dem Tiefboxenboden zu gewährleisten, wird vorgeschlagen, dass mehrere im Wesentlichen parallel zueinander sich erstreckende Reihen von Boden-Auflagevorsprüngen vorgesehen sind. Dabei können die Boden-Auflagevorsprünge wenigstens zweier unmittelbar benachbarter Reihen in einer Reihenlängsrichtung zueinander nicht versetzt sein.

Eine gute Verformbarkeit bei gleichzeitig ausreichender Abstützwechselwirkung kann im Bereich des ersten Einlagekörpers dadurch erreicht werden, dass die Boden-Auflagevorsprünge eine Auflageebene aufspannende Boden-Auflagebereiche aufweisen, und dass wenigstens ein Teil der, vorzugsweise im Wesentlichen alle Boden-Auflagevorsprünge als bezüglich der Auflageebene vorzugsweise im Wesentlichen in der gleichen Richtung angewinkelte Auflagelamellen ausgebildet sind. Durch die Anwinkelung der Auflagevorsprünge ist die Richtung vorgegeben, in welche diese bei Belastung durch ein Tier sich verformen werden, so dass eine einander entgegen gerichtete Verformung verschiedener Auflagevorsprünge, welche die Verformung des gesamten Einlagekörpers im Wesentlichen blockieren kann, verhindert wird.

Bei einer weiteren Ausgestaltung kann vorgesehen sein, dass wenigstens ein Teil der, vorzugsweise im Wesentlichen alle Boden-Auflagevorsprünge als kalottenartige Erhebungen ausgebildet sind.

Auch für eine möglichst gleichmäßig verteilte Wechselwirkung mit dem Einstreumaterial ist es vorteilhaft, wenn mehrere im Wesentlichen parallel zueinander sich erstreckende Reihen von Einstreumaterial-Auflagevorsprüngen vorgesehen sind. Dabei können die Einstreumaterial-Auflagevorsprünge wenigstens zweier unmittelbar benachbarter Reihen in einer Reihenlängsrichtung zueinander versetzt sein.

Für einen hohen Komfort kann vorgesehen sein, dass wenigstens ein Teil der, vorzugsweise im Wesentlichen alle Einstreumaterial-Auflagevorsprünge als kalottenartige Erhebungen ausgebildet sind.

Zur Festlegung der Tiefboxeneinlage auf einem Tiefboxenboden kann vorgesehen sein, dass der erste Einlagekörper einen ersten Befestigungsrandbereich aufweist, dass der zweite Einlagekörper einen auf dem ersten Befestigungsrandbereich aufliegend zu positionierenden zweiten Befestigungsrandbereich aufweist, und dass im ersten Befestigungsrandbereich und im zweiten Befestigungsrandbereich Befestigungsorgandurchgriffsöffnungen zum Durchgriff von die beiden Einlagekörper an einem Tiefboxenboden festlegenden Befestigungsorganen ausgebildet sind.

Um insbesondere in Wechselwirkung mit dem Tiefboxenboden über die gesamte Tiefboxeneinlage eine im Wesentlichen gleichmäßige Auflagewirkung erzielen zu können, wird vorgeschlagen, dass der erste Befestigungsrandbereich und die Boden-Auflagevorsprünge eine Auflageebene aufspannende Boden-Auflagebereiche aufweisen.

Der erste Einlagekörper kann eine Dicke im Bereich von 50 mm bis 70 mm, vorzugsweise etwa 58 mm, aufweisen. Der zweite Einlagekörper kann eine Dicke im Bereich von 30 mm bis 50 mm, vorzugsweise etwa 42 mm, aufweisen. Ferner können benachbarte Einstreumaterial-Auflagevorsprünge in ihren Scheitelbereichen einen gegenseitigen Abstand von 130 mm bis 160 mm, vorzugsweise etwa 145 mm, aufweisen.

Für den angestrebten hohen Liegekomfort sind vorzugsweise der erste Einlagekörper wenigstens im Bereich der Boden-Auflagevorsprünge und der zweite Einlagekörper wenigstens im Bereich der Einstreumaterial-Auflagevorsprünge elastisch verformbar. Beispielsweise können der erste Einlagekörper oder/und der zweite Einlagekörper mit vorzugsweise durch Recycling gewonnenem Gummigranulat aufgebaut sein. Derartiges Material ermöglicht einerseits eine vergleichsweise kostengünstige Herstellung der Einlagekörper. Andererseits ist dieses Material gegen Tierausscheidungen sehr resistent und weist auch bei häufiger Belastung und dabei entstehender Verformung eine lange Haltbarkeit auf.

Die vorliegende Erfindung betrifft ferner eine Tiefbox für einen Tierstall, umfassend einen Tiefboxenboden und eine Tiefboxenumrandung, wobei auf dem Tiefboxenboden wenigstens eine erfindungsgemäß aufgebaute Tiefboxeneinlage angeordnet ist und ein von dem Tiefboxenboden und der Tiefboxenumrandung umgrenzter Tiefboxeninnenraum wenigstens teilweise mit wenigstens eine Tiefboxeneinlage bzw. einen Einlagekörper derselben im Wesentlichen vollständig überdeckendem Einstreumaterial gefüllt ist.

Um die Wirksamkeit einer erfindungsgemäß aufgebauten Tiefboxeneinlage insbesondere dort erreichen zu können, wo diese von besonderem Vorteil ist, wird vorgeschlagen, dass die Tiefboxenumrandung einen Front-Umrandungsbereich und einen Heck-Umrandungsbereich umfasst, wobei bei in der Tiefbox positioniertem Tier ein Bugbereich des Tiers im Bereich des Front-Umrandungsbereichs positioniert ist, und wobei wenigstens eine Tiefboxeneinlage nahe dem Front-Umrandungsbereich positioniert ist.

Insbesondere kann vorgesehen sein, dass die Tiefboxenbodenumrandung einen Front-Umrandungsbereich und einen Heck-Umrandungsbereich umfasst, und dass wenigstens eine Tiefboxeneinlage in einer Tiefboxen-Längserstreckungsrichtung zwischen dem Front-Umrandungsbereich und dem Heck-Umrandungsbereich eine Erstreckungslänge von 40 % bis 80 %, vorzugsweise etwa 55 %, der Erstreckungslänge des Tiefboxeninnenraums in der Tiefboxen-Längserstreckungsrichtung aufweist.

Für einen einfachen Aufbau einer Tiefbox, in welcher mehrere Tiere Platz finden können, wird vorgeschlagen, dass die Tiefboxenbodenumrandung einen Front-Umrandungsbereich und einen Heck-Umrandungsbereich umfasst, und dass im Wesentlichen quer zu einer zwischen dem Front-Umrandungsbereich und dem Heck-Umrandungsbereich orientierten Tiefboxen-Längserstreckungsrichtung eine Mehrzahl von nebeneinander angeordneten Tierliegeplätzen in dem Tiefboxeninnenraum jeweils mit wenigstens einer Tiefboxeneinlage vorgesehen ist.

Um an den von dem Front-Umrandungsbereich entfernten Ende der Tiefboxeneinlage einen allmählichen Übergang zu demjenigen Bereich, in welchem nur Einstreumaterial vorgesehen ist, bereitstellen zu können, wird vorgeschlagen, dass der erste Einlagekörper in seinem von dem Front-Umrandungsbereich entfernten Endbereich eine abnehmende Dicke aufweist, und dass der zweite Einlagekörper durch Verformung an die abnehmende Dicke des ersten Einlagekörpers angepasst ist. Dabei kann beispielsweise vorgesehen sein, dass der zweite Einlagekörper eine im Wesentlichen gleichmäßige Dicke von seinem dem Front-Umrandungsbereich nahe liegenden Endbereich zu seinen von dem Front-Umrandungsbereich entfernten Endbereich aufweist. Es ist in diesem Zusammenhang darauf hinzuweisen, dass hier mit "Dicke" nicht die Materialstärke eines jeweiligen Einlagekörpers in irgend einem zwischen Vorsprüngen daran gebildeten Bereich angesprochen ist, sondern die bei einem jeweiligen Einlagekörper zwischen dessen beiden nach oben bzw. nach unten orientiert zu positionierenden Seiten definierte Gesamthöhe, beispielsweise aufgespannt durch jeweilige Ebenen, in welchen die am weitesten unten zu positionierenden Bereiche bzw. die am weitesten oben zu positionierenden Bereiche eines jeweiligen Einlagekörpers liegen, angesprochen ist.

Bei wiederholtem Hinlegen und Aufstehen eines Tieres in einer erfindungsgemäß aufgebauten Tiefbox besteht grundsätzlich die Gefahr, dass das den Tiefboxeninnenraum ausfühlende und wenigstens eine Tiefboxeneinlage überdeckende Einstreumaterial sich in dem Bereich, in welchem ein Hinterteil eines Tieres zu liegen kommt, verschiebt und somit in diesem Bereich das Tier auf dem im Allgemeinen mit Betonmaterial aufgebauten Tiefboxenboden zu liegen kommt. Um auch in diesem Falle dafür zu sorgen, dass ein direkter Kontakt eines Tieres mit dem Tiefboxenboden vermieden wird, wird vorgeschlagen, dass in dem Tiefboxeninnenraum auf wenigstens eine Tiefboxeneinlage folgend eine von dem Einstreumaterial im Wesentlichen vollständig überdeckte Tiefboxenanschlusseinlage vorgesehen ist.

Um einerseits einen ausreichenden Liegekomfort bereitzustellen, andererseits aber den Abfluss von flüssigen Ausscheidungen zu ermöglichen, wird vorgeschlagen, dass die Tiefboxenanschlusseinlage wenigstens einen Anschlusseinlagekörper umfasst, wobei in dem Anschlusseinlagekörper eine Mehrzahl von wenigstens zu einer vom Tiefboxenboden abgewandten Oberseite der Tiefboxenanschlusseinlage offenen Füllmaterial-Aufnahmeaussparungen vorgesehen ist.

Wenigstens ein Teil der, vorzugsweise alle Füllmaterial-Aufnahmeaussparungen können wenigstens teilweise, vorzugsweise vollständig, mit Füllmaterial, vorzugsweise körnigem Füllmaterial, gefüllt sein. Als derartiges körniges Füllmaterial eignet sich besonders Sand.

Für eine gleichmäßige Verteilung der Füllmaterial-Aufnahmeaussparungen kann der Anschlusseinlagekörper zum Bereitstellen der Füllmaterial-Aufnahmeaussparungen mit wabenartiger Struktur bereitgestellt sein.

Bei einer besonders einfachen, kostengünstig zu realisierenden Ausgestaltung ist vorzugsweise die Tiefboxenanschlusseinlage einstückig, also mit einem einzigen Anschlusseinlagekörper ausgebildet.

Bei einer alternativen Ausgestaltung wird vorgeschlagen, dass die Tiefboxenanschlusseinlage einen auf dem Tiefboxenboden aufliegenden ersten Anschlusseinlagekörper und einen über dem ersten Anschlusseinlagekörper angeordneten und die Oberseite der Tiefboxenanschlusseinlage bereitstellenden zweiten Anschlusseinlagekörper umfasst.

Um die Anzahl der zum Aufbau einer erfindungsgemäß ausgestalteten Tiefbox zu verwendenden Bauteile möglichst gering zu halten, wird vorgeschlagen, dass wenigstens ein Teil wenigstens eines Anschlusseinlagekörpers wenigstens teilweise mit einer Tiefboxeneinlage einstückig ausgebildet ist. Bei einstückiger Ausgestaltung der Tiefboxenanschlusseinlage kann der einzige Anschlusseinlagekörper derselben mit dem ersten Einlagekörper oder dem zweiten Einlagekörper einer Boxeneinlage einstückig, also als ein Materialblock ausgebildet und somit in einem Herstellungsvorgang aufgebaut sein. Bei Ausgestaltung der Tiefboxenanschlusseinlage beispielsweise mit zwei übereinander zu positionierenden Anschlusseinlagekörpern kann der untere der beiden Anschlusseinlagekörper mit einem ersten Einlagekörper einstückig ausgebildet sein, während der obere der beiden Anschlusseinlagekörper mit dem oberen, also dem zweiten Einlagekörper, einstückig ausgebildet sein kann.

Um im Wesentlichen im gesamten Tiefboxeninnenraum den Tiefboxenboden zu überdecken, wird vorgeschlagen, dass die Tiefboxenanschlusseinlage den zwischen dem Heck-Umrandungsbereich und einer im Tiefboxeninnenraum angeordneten Tiefboxeneinlage gebildeten Zwischenraum in Richtung von der Tiefboxeneinlage zu dem Heck-Umrandungsbereich im Wesentlichen vollständig überdeckt.

Um auch im Bereich der Tiefboxenanschlusseinlage einen hohen Liegekomfort bei gleichwohl sehr guter Haltbarkeit gewährleisten zu können, wird vorgeschlagen, dass die Tiefboxenanschlusseinlage wenigstens bereichsweise elastisch verformbar ist, oder/und dass die Tiefboxenanschlusseinlage wenigstens bereichsweise mit vorzugsweise durch Recycling gewonnenem Gummigranulat aufgebaut ist.

Die vorliegende Erfindung wird nachfolgend mit Bezug auf die beiliegenden Figuren detailliert beschrieben. Es zeigt:
- Fig. 1: eine Seitenansicht einer Tiefbox für einen Tierstall;
- Fig. 2: vergrößert ein Detail der Tiefbox der Fig. 1;
- Fig. 3: in perspektivischer Ansicht zwei übereinander zu positionierende Einlagekörper einer Tiefbox in Einlage für die Tiefbox der Fig. 1;
- Fig. 4: eine der Fig. 3 entsprechende Ansicht der beiden Einlagekörper, dargestellt im Schnitt und betrachtet von schräg unten;
- Fig. 5: eine Seitenansicht einer alternativen Ausgestaltungsart einer Tiefbox;
- Fig. 6: eine Seitenansicht einer weiteren alternativen Ausgestaltungsart einer Tiefbox;
- Fig. 7: eine Seitenansicht einer weiteren alternativen Ausgestaltungsart einer Tiefbox.

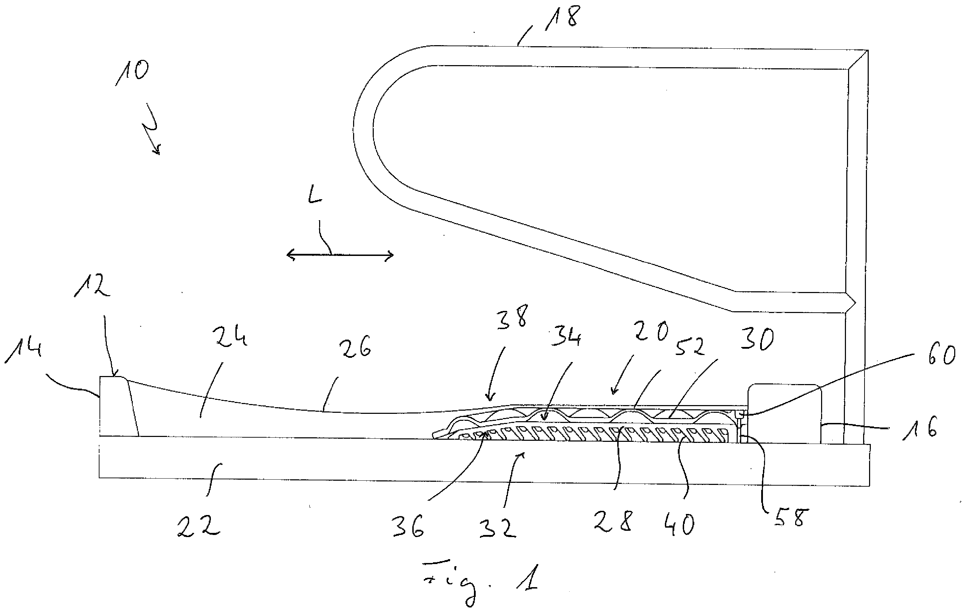

In Fig. 1 ist eine allgemein mit 10 bezeichnete Tiefbox für einen Tierstall, insbesondere einen Rinderstall, dargestellt. Die Tiefbox 10 umfasst eine Tiefboxenumrandung 12, von welcher in Fig. 1 ein Heck-Umrandungsbereich 14 sowie ein Bug-Umrandungsbereich 16 zu erkennen sind. Bei in einer derartigen Tiefbox 10 positioniertem Tier wird ein Bugbereich des Tieres nahe dem Front-Umrandungsbereich 16 positioniert sein, während ein Hinterteil des Tieres nahe dem Heck-Umrandungsbereich 14 positioniert sein wird. Einzelne Steh- bzw. Liegeplätze können quer zu einer Tiefboxen-Längserstreckungsrichtung L durch Trennbügel 18 voneinander getrennt sein. Zwischen unmittelbar benachbarten Steh- bzw. Liegeplätzen kann jeweils ein Seiten-Umrandungsbereich der Tiefboxenumrandung 12 vorgesehen sein. Grundsätzlich können jedoch auch mehrere nebeneinander positionierte Steh- bzw. Liegeplätze durch eine gemeinsame Tiefboxenumrandung umrandet sein, so dass diese nicht durch einen Seiten-Umrandungsbereich voneinander getrennt sind.

Ebenso wie die Tiefboxenumrandung 12 ist eine nachfolgend detaillierter beschriebene Tiefboxeneinlage 20 auf einem bzw. angrenzend an einen beispielsweise mit Betonmaterial aufgebauten Tiefboxenboden 22 positioniert. Die Tiefboxeneinlage 20 erstreckt sich in der Tiefbox 10 zwischen dem Front-Umrandungsbereich 16 und dem Heck-Umrandungsbereich 14 in der Tiefboxen-Längserstreckungsrichtung L, ausgehend von dem Front-Umrandungsbereich 16, näherungsweise über die Hälfte der gesamten Erstreckungslänge eines von der Tiefboxenumrandung 12 umschlossenen Tiefboxeninnenraums 24. Beispielsweise kann die Erstreckungslänge der Tiefboxeneinlage 20 in einem Bereich von 40 % bis 80 %, vorzugsweise bei etwa 55 %, der Erstreckungslänge des Tiefboxeninnenraums 24 in der Tiefboxen-Längserstreckungsrichtung L betragen. In dem nicht von der Tiefboxeneinlage 20 eingenommenen Bereich des Tiefboxeninnenraums 24 ist dieser mit Einstreumaterial 26 gefüllt. Dieses Einstreumaterial 26 ist vorzugsweise bereitgestellt durch ein Gemisch aus Stroh und Tierausscheidungen, welches einerseits aufgrund seiner Elastizität und seines natürlichen Aufbaus einen hohen Steh- bzw. Liegekomfort für ein Tier bereitstellt, andererseits aufgrund der Bindung durch die Tierausscheidungen eine gegen übermäßiges Verschieben sichere, hohe strukturelle Stabilität bereitstellt. Das Einstreumaterial 26 überdeckt auch die Tiefboxeneinlage 20, so dass im gesamten Erstreckungsbereich zwischen dem Front-Umrandungsbereich 16 und dem Heck-Umrandungsbereich 14 die nach oben hin freiliegende Oberfläche, auf welcher ein Tier sich hinlegen bzw. stehen kann, durch das Einstreumaterial 26 bereitgestellt ist. Aufgrund des Vorhandenseins der, wie nachfolgend erläutert, mit hoher Flexibilität ausgebildeten Tiefboxeneinlage 20 ist jedoch insbesondere in demjenigen Bereich, in welchem ein Tier mit seinem Bugbereich zu Stehen bzw. zu Liegen kommt, eine erhöhte Elastizität bzw. Nachgiebigkeit bereitgestellt, welche den Komfort für ein in der Tiefbox 10 stehendes bzw. liegendes Tier erhöht und insbesondere auch die Belastung von Gelenken der Vorderbeine eines Tieres beim Aufstehen und Hinlegen mindert.

Die Tiefboxeneinlage 20 umfasst zwei übereinander positionierte bzw. zu positionierende Einlagekörper 28, 30. Der erste Einlagekörper 28 weist eine Boden-Auflageseite 32 auf, mit welcher dieser auf dem Tiefboxenboden 22 aufliegt. Bei mit der Boden-Auflageseite 32 auf dem Tiefboxenboden 22 aufliegendem ersten Einlagekörper 28 ist eine erste Einlagekörper-Auflageseite 34 des ersten Einlagekörpers 28 nach oben, also in Richtung vom Tiefboxenboden 22 weg orientiert.

Der zweite Einlagekörper 30 weist eine zweite Einlagekörper-Auflageseite 36 auf, mit welcher dieser auf der ersten Einlagekörper-Auflageseite 34 des ersten Einlagekörpers 28 aufliegt. Bei auf dem ersten Einlagekörper 28 aufliegendem zweiten Einlagekörper 30 ist eine Einstreumaterial-Auflageseite 38 desselben nach oben, also in Richtung vom Tiefboxenboden 22 bzw. vom ersten Einlagekörper 28 weg orientiert. Über der Einstreumaterial-Auflageseite 38 liegt das im Tiefboxeninnenraum 24 über der Tiefboxeneinlage 20 positionierte Einstreumaterial 26.

Der erste Einlagekörper 28 weist an seiner dem Tiefboxenboden 22 zugewandt zu positionierenden Boden-Auflageseite 32 eine Mehrzahl von Boden-Auflagevorsprüngen 40 auf. Diese im dargestellten Beispiel als Auflagelamellen 42 ausgebildeten Boden-Auflagevorsprünge 40 sind vorzugsweise in in der Tiefboxen-Längserstreckungsrichtung L sich erstreckenden Reihen angeordnet, wobei Auflagelamellen 42 unmittelbar benachbarter Reihen in der Tiefboxen-Längserstreckungsrichtung L vorzugsweise nicht zueinander versetzt sind.

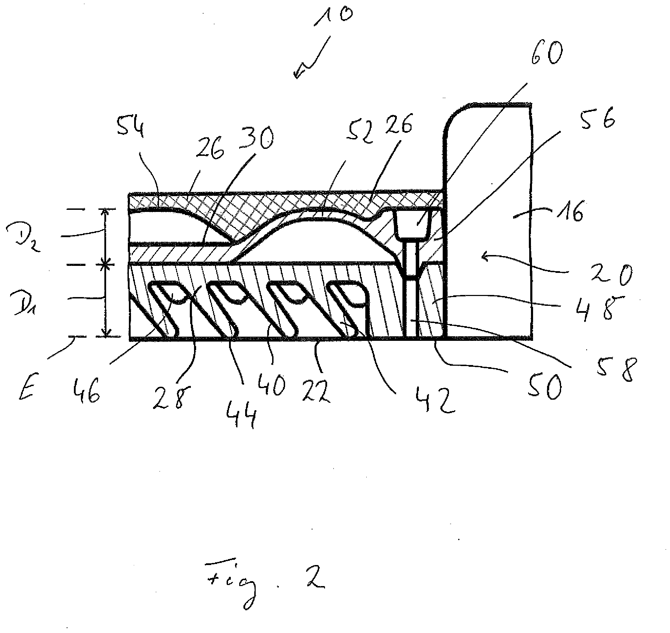

Die Boden-Auflagevorsprünge 40 weisen in ihren freien Endbereichen jeweils Boden-Auflagebereiche 44 auf, welche eine zur Zeichenebene der Fig. 1 und 2 orthogonale Auflageebene E definieren und auf dem Tiefboxenboden 22 aufliegen. Vorzugsweise sind alle Boden-Auflagevorsprünge 40 in der gleichen Richtung, beispielsweise in Richtung auf den Front-Umrandungsbereich 16 zu, und im gleichen Ausmaß bezüglich der Ebene E angewinkelt. In Zuordnung zu jedem Boden-Auflagevorsprung 40 kann, angrenzend an einen in der Reihenrichtung unmittelbar folgenden Boden-Auflagevorsprung 40, ein Abstützbereich 46 vorgesehen sein, welcher bei einer unter der Belastung durch ein Tier hervorgerufene Verformung eines jeweiligen Boden-Auflagevorsprungs 40 einen Anschlag für diesen bildet und somit eine weitergehende bzw. übermäßige Verformung im Wesentlichen unterbindet.

Im Umfangsrandbereich des ersten Einlagekörpers 28 ist ein die Boden-Auflagevorsprünge 40 umrandender erster Befestigungsrandbereich 48 vorgesehen. Auch der erste Befestigungsrandbereich 48 stellt einen Boden-Auflagebereich 50 bereit, welcher, beispielsweise auch bei nicht auf dem Tiefboxenboden 22 aufliegendem ersten Einlagekörper 28, in der durch die Boden-Auflagebereiche 44 der Boden-Auflagevorsprünge 40 aufgespannten Auflageebene E liegt. Somit kann dafür gesorgt werden, dass bei auf einem im Wesentlichen planen Tiefboxenboden 22 aufliegendem ersten Einlagekörper 28 dieser einerseits mit dem Boden-Auflagebereich 50 des ersten Befestigungsrandbereichs 48 und andererseits mit den Boden-Auflagebereichen 44 der Boden-Auflagevorsprünge 40 aufliegt.

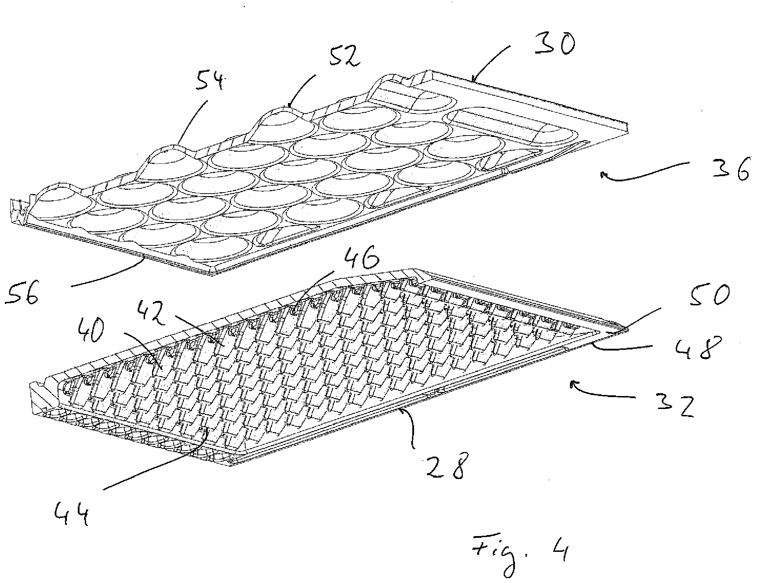

Der zweite Einlagekörper 30 weist eine Mehrzahl von an seiner Einstreumaterial-Auflageseite 38 hervorstehenden Einstreu-Auflagevorsprüngen 52 auf. Die Einstreumaterial-Auflagevorsprünge 52 sind vorzugsweise als näherungsweise kugelkalottenartige Erhebungen ausgebildet, welche sich auch an der zweiten Einlagekörper-Auflageseite 36 des zweiten Einlagekörpers 30 abzeichnen. Dies bedeutet, dass die als kalottenartige Erhebungen 54 ausgebildeten Einstreumaterial-Auflagevorsprünge 52 vorzugsweise nicht massiv ausgebildet sind, sondern dass der zweite Einlagekörper 30 eine näherungsweise gleichmäßige Dicke bzw. Wandungsstärke aufweist, beispielsweise, was insbesondere in Fig. 4 erkennbar ist, zur Bereitstellung einer erhöhten Flexibilität bzw. einer leichteren Verformbarkeit, im Bereich der kalottenartigen Erhebungen 54 eine geringere Wandungsstärke aufweist, als in den Bereichen zwischen derartigen kalottenartigen Erhebungen 54.

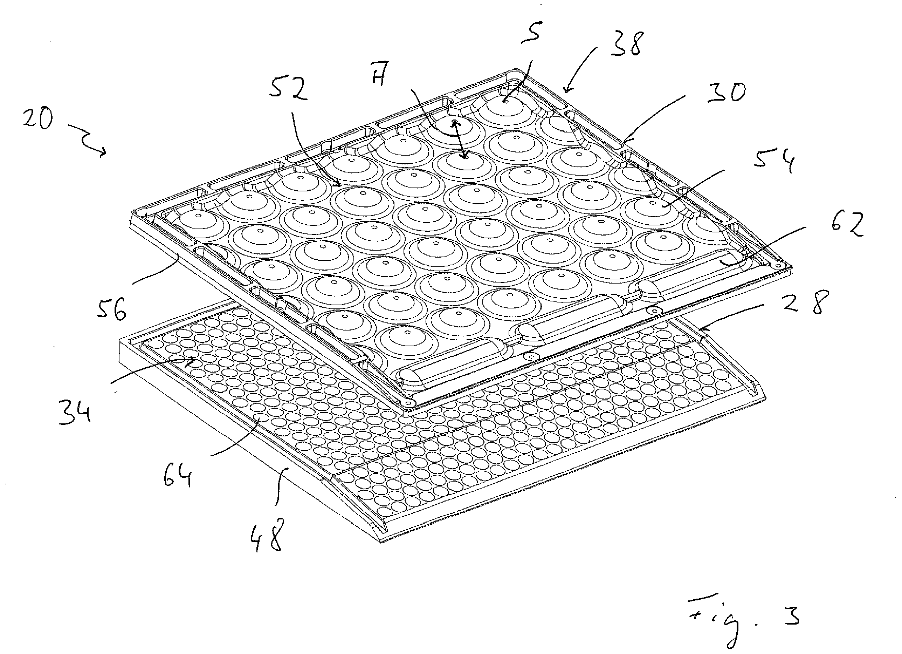

In Fig. 3 ist erkennbar, dass auch die Einstreumaterial-Auflagevorsprünge 52 in in der Tiefboxen-Längserstreckungsrichtung L sich erstreckenden Reihen angeordnet sind, wobei die Einstreumaterial-Auflagevorsprünge 52 unmittelbar benachbarter Reihen zueinander in der Tiefboxen-Längserstreckungsrichtung L versetzt sind und einander quer zur Tiefboxen-Längserstreckungsrichtung L überlappen können.

Durch die Einstreumaterial-Auflagevorsprünge 52 wird an der Einstreumaterial-Auflageseite 38 des zweiten Einlagekörpers 30 eine vergleichsweise grobe Struktur gebildet, in welche das Einstreumaterial 26 eindringen kann und mit welcher das Einstreumaterial 26 eine einer Verschiebung desselben entgegenwirkende formschlüssige Verbindung eingehen kann. Da durch die Ausgestaltung der Einstreumaterial-Auflagevorsprünge 52 als kalottenartige Erhebungen das Entstehen von spitzenartigen Vorsprüngen vermieden wird, wird auch bei einer vergleichsweise dünnen Lage von Einstreumaterial 26 über dem zweiten Einlagekörper 30 ein hoher Liegekomfort für ein in einer derart aufgebauten Tiefbox 10 liegendes Tier gewährleistet.

Der zweite Einlagekörper 30 weist in Zuordnung zum ersten Befestigungsrandbereich 48 des ersten Einlagekörpers 28 einen zweiten Befestigungsrandbereich 56 auf. Mit dem zweiten Befestigungsrandbereich 56 liegt der zweite Einlagekörper 30 auf dem erstem Einlagekörper 28 in demjenigen Bereich auf, in welchem an diesem der erste Befestigungsrandbereich 48 vorgesehen ist. Die beiden Befestigungsrandbereiche 48, 56 liegen somit übereinander. Wie in Fig. 1 erkennbar, sind in diesen beiden Befestigungsrandbereichen 48, 56 Befestigungsorgan-Durchgriffsöffnungen 58, 60 vorgesehen, welche bei übereinander liegenden Einlagekörpern 28, 30 zueinander ausgerichtet sind und das Hindurchführen von Befestigungsorganen, beispielsweise Schraubbolzen, ermöglichen, welche zum Befestigen der Tiefboxeneinlage 20 auf dem Tiefboxenboden 22 in diesen eingreifend angebracht werden können.

Man erkennt in Fig. 1 weiter, dass insbesondere der erste Einlagekörper 28 in seinem dem Heck-Umrandungsbereich 14 näher liegend zu positionierenden Endbereich eine abnehmende Dicke aufweist. Dieser abnehmenden Dicke bzw. in diesem Bereich keilartigen Ausgestaltung des ersten Einlagekörpers 28 passt der zweite Einlagekörper 30 sich an, wenn dieser mit seiner zweiten Einlagekörper-Auflageseite 36 auf der ersten Einlagekörper-Auflageseite 34 des ersten Einlagekörpers 28 positioniert und, wie vorangehend beschrieben, mit diesem zusammen auf dem Tiefboxenboden 22 befestigt wird. Somit nimmt mit zunehmendem Abstand vom Front-Umrandungsbereich 16 die Gesamtdicke der Tiefboxeneinlage 20 ab, so dass ein allmählicher Übergang zu einem Bereich entsteht, in welchem der Tiefboxeninnenraum 24 nur mit Einstreumaterial 26 gefüllt ist.

Mit der Tiefboxeneinlage 20 wird aufgrund der hohen Elastizität der beiden Einlagekörper 28, 30 einerseits ein hoher Komfort für ein Tier gewährleistet, andererseits wird das Auftreten von Verletzungen bzw. hohen Belastungen der Gelenke, insbesondere der Vorderbeine, vermieden. Dazu sind vorzugsweise die beiden Einlagekörper 28, 30 aus elastisch verformbarem Material, wie z. B. Gummi oder gummiartigem Material aufgebaut. Insbesondere können die Einlagekörper 28, 30 mit durch Recycling gewonnenem und gebundenem Gummigranulat aufgebaut sein. Für eine ausreichende Elastizität kann beispielsweise vorgesehen sein, dass der erste Einlagekörper 28 eine Dicke D₁ im Bereich von 50 mm bis 70 mm, vorzugsweise etwa 58 mm, aufweist. Der zweite Einlagekörper 30 kann eine Dicke D₂ im Bereich von 30 mm bis 50 mm, vorzugsweise etwa 42 mm, aufweisen. Um eine ausreichende Verzahnung mit dem Einstreumaterial zu gewährleisten, können die Einstreumaterial-Auflagevorsprünge in ihren Scheitelbereichen S einen gegenseitigen Abstand A im Bereich von 130 mm bis 160 mm, vorzugsweise etwa 145 mm, aufweisen. Ferner können zum Erreichen einer besseren Verzahnung mit dem Einstreumaterial 26 dort, wo der zweite Einlagekörper 30 in der Tiefboxen-Längserstreckungsrichtung L in Abstand zum Frontumrandungsbereich 16 endet, die Einstreumaterial-Auflagevorsprünge 52 durch quer zur Tiefboxen-Längserstreckungsrichtung L sich erstreckende, langgestreckte, wulstartige Erhebungen 62 bereitgestellt sein. An der ersten Einlagekörper-Auflageseite 34 des ersten Einlagekörpers 28 kann für eine erhöhte Elastizität und eine verbesserte Auflagewechselwirkung mit dem zweiten Einlagekörper 30 eine Struktur beispielsweise mit einer Mehrzahl noppenartiger Erhebungen 64 vorgesehen sein.

Es sei abschließend darauf hingewiesen, dass selbstverständlich die beiden Einlagekörper unter Beibehalt des Prinzips einer vergleichsweise guten elastischen Verformbarkeit auch mit anderer Struktur ausgebildet sein können. So können beispielsweise auch am ersten Einlagekörper 28 die daran vorgesehenen Boden-Auflagevorsprünge 40 als kalottenartige Erhebungen ausgebildet sein, die dann nach unten, also in Richtung zum Tiefboxenboden 22 hervorstehen und auf diesem aufliegen. Dabei kann der Aufbau derart sein, dass jeweilige kalottenartige Erhebungen am ersten Einlagekörper und am zweiten Einlagekörper übereinander und zueinander ausgerichtet positioniert sind, so dass durch jeweils zwei derartige übereinander positionierte kalottenartige Erhebungen in der Gesamtheit eine kugelartige Struktur erzeugt wird.

Ferner können die beiden Einlagekörper 28, 30 so gestaltet bzw. dimensioniert sein, dass der zweite Einlagekörper 30 mit seinem zweiten Befestigungsrandbereich 56 den ersten Einlagekörper 28 an seiner Außenseite umgreift und mit diesem zweiten Befestigungsrandbereich 56 auch oder nur auf dem Tiefboxenboden 22 aufliegt. Der erste Einlagekörper 28 kann somit vollständig vom zweiten Einlagekörper 30 übergriffen sein und durch den direkt an dem Tiefboxenboden 22 festgelegten zweiten Einlagekörper 30 am Tiefboxenboden 22 gehalten werden.

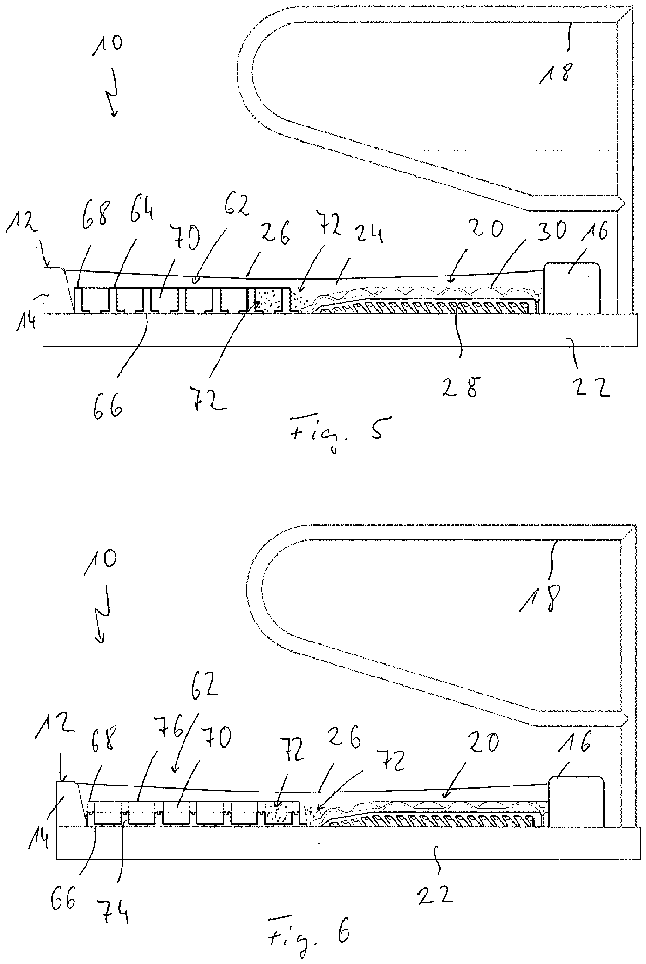

Die Fig. 5 bis 7 zeigen verschiedene Ausgestaltungsarten von Tiefboxen, welche auf dem vorangehend mit Bezug auf die Fig. 1 bis 4 beschriebenen Ausgestaltungsprinzip aufbauen. Insbesondere kommen bei den in den Fig. 5 bis 7 dargestellten Tiefboxen Tiefboxeneinlagen zum Einsatz, wie sie vorangehend mit Bezug auf die Fig. 1 bis 4 beschrieben wurden. Es wird daher diesbezüglich auf die voranstehenden Ausführungen verwiesen.

Die Fig. 5 zeigt, dass im Tiefboxeninnenraum 24 anschließend an die Tiefboxeneinlage 20 eine allgemein mit 62 bezeichnete Tiefboxenanschlusseinlage vorgesehen ist. Die Tiefboxenanschlusseinlage 62 überdeckt im Wesentlichen den gesamten zwischen der Tiefboxeneinlage 20 und dem Heck-Umrandungsbereich 14 gebildeten Zwischenraum bzw. den in diesem Zwischenraum nach oben freiliegenden Bereich des Tiefboxenbodens 22. Quer zur Erstreckungsrichtung zwischen der Tiefboxeneinlage 20 und dem Heck-Umrandungsbereich 14 kann die Abmessung der Tiefboxenanschlusseinlage 62 der Abmessung der daran anschließend positionierten Tiefboxeneinlage 20 entsprechen. Auch in Höhenrichtung, also gemessen vom Tiefboxenboden 22 aus, kann die Abmessung der Tiefboxenanschlussanlage 62 der Abmessung der Tiefboxeneinlage 20 entsprechen.

Die Tiefboxenanschlusseinlage 62 ist bei dem in Fig. 5 dargestellten Ausgestaltungsbeispiel einstückig, also mit einem einzigen Anschlusseinlagekörper 64 ausgebildet. Dieser liegt mit seiner Unterseite 66 auf dem Tiefboxenboden 22 auf und ist an seiner Oberseite 68 von dem Einstreumaterial 26 überdeckt. In der Tiefboxeneinlage 62 bzw. im Anschlusseinlagekörper 64 derselben ist eine Mehrzahl von Vorzugsweise sowohl zur Oberseite 68, als auch zur Unterseite 66 offenen Füllmaterial-Aufnahmeaussparungen 70 vorgesehen. Diese sind im Wesentlichen vollständig mit Füllmaterial 72, beispielsweise Sand, aufgefüllt. Auch der Bereich, in welchem die Tiefboxenanschlusseinlage 62 an die Tiefboxeneinlage 20 anschließt, kann zum Bereitstellen eines im Wesentlichen glatten Übergangs mit derartigem Füllmaterial 72 gefüllt sein.

Die Füllmaterial-Aufnahmeaussparungen 70 können so gestaltet bzw. geformt sein, dass sich insgesamt eine wabenartige Struktur ergibt, wobei die einzelnen Waben z.B. eine dreieckige, rechteckige, insbesondere quadratische, oder eine sechseckige Struktur aufweisen können.

Um auch im Bereich der Tiefboxeneinschlusseinlage 62 eine für einen hohen Liegekomfort erforderliche Elastizität bereitstellen zu können, ist die Tiefboxenanschlusseinlage 62 bzw. der einzige Anschlusseinlagekörper 64 derselben z. B. aus Gummi oder gummiartigem Material aufgebaut. Beispielsweise kann durch Recycling gewonnenes und gebundenes Altgummigranulat verwendet werden. Hier kann beispielsweise das gleiche Aufbaumaterial verwendet werden, wie dies auch für den Aufbau der Tiefboxeneinlage 20 bzw. der beiden Einlagekörper 28, 30 derselben verwendet wird. Auch der Einsatz von Kunststoffmaterial, wie zum Beispiel Polyethylen (PE) oder Polypropylen (PP), allgemein thermoplastische Elastomere (TPE) oder Recyclingkunststoff, zum Aufbau des Anschlusseinlagekörpers 64 ist möglich.

Um ein Verschieben des grundsätzlich bereits zwischen dem Heck-Umrandungsbereich 14 und der Tiefboxeneinlage 20 gehaltenen Anschlussanlagekörper 64 insbesondere auch in seitlicher Richtung zu verhindern, kann dieser durch ein oder mehrere Befestigungsorgane, beispielsweise Schraubbolzen, am Tiefboxenboden 22 festgelegt werden.

Die Fig. 6 zeigt eine Ausgestaltungsvariante, bei welcher die Tiefboxenanschlusseinlage 62 mit zwei übereinander positionierten Anschlusseinlagekörpern 74, 76 aufgebaut ist. Der ersten Anschlusseinlagekörper 74 stellt die Unterseite 66 der Tiefboxenanschlusseinlage 62 bereit und liegt auf dem Tiefboxenboden 22 auf. Der zweite Anschlussanlagekörper 76 liegt auf dem ersten Anschlusseinlagekörper 74 auf und stellt die Oberseite 68 der Tiefboxenanschlusseinlage 62 bereit. Die beiden Anschlusseinlagekörper 74, 76 sind vorzugsweise derart geformt, dass die auch in dieser Tiefboxenanschlusseinlage 62 gebildeten Füllmaterial-Aufnahmeaussparungen 70 sich in Höhenrichtung im Wesentlichen unterbrechungsfrei durch die beiden Anschlusseinlagekörper 74, 76 hindurch erstrecken können. Um ein gegenseitiges Verschieben der beiden Anschlusseinlagekörper 74, 76 bezüglich einander zu verhindern, können diese dort, wo sie aufeinander aufliegen, mit einer nut- und feder-artig ausgestalteten Eingriffsformation miteinander gekoppelt sein. Ferner können zur Festlegung der Tiefboxenanschlusseinlage 62 eingesetzte Befestigungsorgane beide Anschlusseinlagekörper 74, 76 durchsetzen und somit diese fest bezüglich einander positionieren. Die beiden übereinander zu positionieren Anschlusseinlagekörper 74, 76 können mit dem gleichen Aufbaumaterial aufgebaut sein. Hier kann beispielsweise das vorangehend mit Bezug auf den Anschlusseinlagekörper 64 der Fig. 5 beschriebene Aufbaumaterial Anwendung finden. Die beiden Anschlusseinlagekörper 74, 64 können jedoch auch mit unterschiedlichen Aufbaumaterialien ausgebildet sein. So könnte beispielsweise der oben positionierte Anschlusseinlagekörper 76 mit allgemein eine höhere Elastizität aufweisendem Gummi oder gummiartigen Material aufgebaut sein, während der unten positionierte Anschlusseinlagenkörper 74 mit Kunststoffmaterial, beispielsweise dem vorangehend angegebenen Kunststoffmaterial, aufgebaut sein kann.

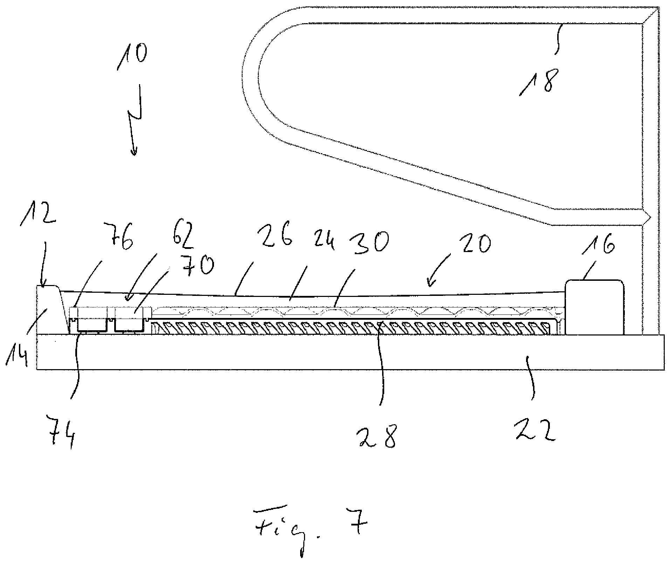

Die Fig. 7 zeigt eine Ausgestaltungsart, bei welcher die mit zwei Anschlusseinlagekörpern 74, 76 aufgebaute Tiefboxenanschlusseinlage 62 mit der Tiefboxeneinlage 20 einstückig ausgebildet ist. Insbesondere kann dabei vorgesehen sein, dass der erste Anschlusseinlagekörper 74 mit dem ersten Einlagekörper 20 einstückig ausgebildet ist und der zweite Anschlusseinlagekörper 76 mit dem zweiten Einlagekörper 30 einstückig ausgebildet ist.

Bei einer alternativen Ausgestaltungsart könnte beispielsweise eine einstückig, also mit einem einzigen Anschlusseinlagekörper 64 wie in Fig. 5 dargestellt, ausgebildete Tiefboxenanschlusseinlage 62 mit der Tiefboxeneinlage 20 bzw. einem der beiden Einlagekörper 28, 30 derselben, beispielsweise dem unteren, also dem ersten Einlagekörper 28 einstückig ausgebildet sein. Auch könnte die Tiefboxenanschlusseinlage 62 eine Mehrzahl von nebeneinander liegenden Anschlusseinlagekörpern aufweisen, von welchen beispielsweise der an die Tiefboxeneinlage 20 anschließende Anschlusseinlagekörper mit einem der beiden Einlagekörper 28, 30 einstückig ausgebildet sein könnte.

Durch das Bereitstellen der Tiefboxenanschlusseinlage 62 in einem Bereich, in welchem im Wesentlichen der Heckbereich eines Tieres zu liegen kommt, wird bei hohem Liegekomfort gewährleistet, dass in diesem Bereich sich ansammelnde Tierausscheidungen durch die Füllmaterial-Aufnahmeaussparungen und das darin aufgenommene Füllmaterial hindurch abfließen können. Durch das Ausfüllen der Füllmaterialaufnahmeaussparungen 70 mit beispielsweise durch Sand bereitgestelltem Füllmaterial wird gleichwohl gewährleistet, dass an der Oberseite 68 der Tiefboxenanschlusseinlage 62 eine im Wesentlichen kontinuierlich durchlaufende, gleichwohl in Anpassung an ein sich hinlegendes Tier verformbare Gestalt der Tiefboxenanschlusseinlage erreicht werden kann.

## Patentansprüche

1. Tiefboxeneinlage, umfassend:
- einen ersten Einlagekörper (28) mit einer Boden-Auflageseite (32) zur Auflage des ersten Einlagekörpers (28) auf einem Tiefboxenboden (22) und einer ersten Einlagekörper-Auflageseite (34),
- einen zweiten Einlagekörper (30) mit einer zweiten Einlagekörper-Auflageseite (36) zur Auflage des zweiten Einlagekörpers (30) auf der ersten Einlagekörper-Auflageseite (34) des ersten Einlagekörpers (28) oder/und dem Tiefboxenboden (22) und einer Einstreumaterial-Auflageseite (38) zur Auflage von in eine Tiefbox (10) einzubringendem Einstreumaterial (26) auf dem zweiten Einlagekörper (30),
wobei der erste Einlagekörper (28) an seiner Boden-Auflageseite (32) eine Mehrzahl von in Richtung von der ersten Einlagekörper-Auflageseite (34) weg vorspringenden Boden-Auflagevorsprüngen (40) aufweist und der zweite Einlagekörper (30) an seiner Einstreumaterial-Auflageseite (38) eine Mehrzahl von in Richtung von der zweiten Einlagekörper-Auflageseite (36) weg vorspringenden Einstreumaterial-Auflagevorsprüngen (52) aufweist.

2. Tiefboxeneinlage nach Anspruch 1,
**dadurch gekennzeichnet,**
**dass** mehrere im Wesentlichen parallel zueinander sich erstreckende Reihen von Boden-Auflagevorsprüngen (40) vorgesehen sind, vorzugsweise wobei die Boden-Auflagevorsprünge (40) wenigstens zweier unmittelbar benachbarter Reihen in einer Reihenlängsrichtung zueinander nicht versetzt sind,
oder/und
**dass** die Boden-Auflagevorsprünge (40) eine Auflageebene (E) aufspannende Boden-Auflagebereiche (44) aufweisen, und dass wenigstens ein Teil der, vorzugsweise im Wesentlichen alle Boden-Auflagevorsprünge (40) als bezüglich der Auflageebene (E) vorzugsweise im Wesentlichen in der gleichen Richtung angewinkelte Auflagelamellen (42) ausgebildet sind.

3. Tiefboxeneinlage nach einem der vorangehenden Ansprüche,
**dadurch gekennzeichnet,**
**dass** wenigstens ein Teil der, vorzugsweise im Wesentlichen alle Boden-Auflagevorsprünge als kalottenartige Erhebungen ausgebildet sind, oder/und
**dass** mehrere im Wesentlichen parallel zueinander sich erstreckende Reihen von Einstreumaterial-Auflagevorsprüngen (52) vorgesehen sind, vorzugsweise wobei die Einstreumaterial-Auflagevorsprünge (52) wenigstens zweier unmittelbar benachbarter Reihen in einer Reihenlängsrichtung zueinander versetzt sind,
oder/und
**dass** wenigstens ein Teil der, vorzugsweise im Wesentlichen alle Einstreumaterial-Auflagevorsprünge (52) als kalottenartige Erhebungen (54) ausgebildet sind.

4. Tiefboxeneinlage nach einem der vorangehenden Ansprüche,
**dadurch gekennzeichnet, dass** der erste Einlagekörper (28) einen ersten Befestigungsrandbereich (48) aufweist, dass der zweite Einlagekörper (30) einen auf dem ersten Befestigungsrandbereich (48) aufliegend zu positionierenden zweiten Befestigungsrandbereich (56) aufweist, und dass im ersten Befestigungsrandbereich (48) und im zweiten Befestigungsrandbereich (56) Befestigungsorgandurchgriffsöffnungen (58, 60) zum Durchgriff von die beiden Einlagekörper (28, 30) an einem Tiefboxenboden (22) festlegenden Befestigungsorganen ausgebildet sind, vorzugsweise wobei der erste Befestigungsrandbereich (48) und die Boden-Auflagevorsprünge (40) eine Auflageebene (E) aufspannende Boden-Auflagebereiche (44, 50) aufweisen.

5. Tiefboxeneinlage nach einem der vorangehenden Ansprüche,
**dadurch gekennzeichnet,**
**dass** der erste Einlagekörper (28) eine Dicke (D₁) im Bereich von 50 mm bis 70 mm, vorzugsweise etwa 58 mm, aufweist, oder/und dass der zweite Einlagekörper (30) eine Dicke (D₂) im Bereich von 30 mm bis 50 mm, vorzugsweise etwa 42 mm, aufweist,
oder/und
**dass** benachbarte Einstreumaterial-Auflagevorsprünge (52) in ihren Scheitelbereichen (S) einen gegenseitigen Abstand (A) von 130 mm bis 160 mm, vorzugsweise etwa 145 mm, aufweisen.

6. Tiefboxeneinlage nach einem der vorangehenden Ansprüche,
**dadurch gekennzeichnet, dass** der erste Einlagekörper (28) wenigstens im Bereich der Boden-Auflagevorsprünge (40) und der zweite Einlagekörper (30) wenigstens im Bereich der Einstreumaterial-Auflagevorsprünge (52) elastisch verformbar sind, oder/und dass der erste Einlagekörper (28) oder/und der zweite Einlagekörper (30) mit vorzugsweise durch Recycling gewonnenem Gummigranulat aufgebaut ist.

7. Tiefbox, für einen Tierstall, umfassend einen Tiefboxenboden (22) und eine Tiefboxenumrandung (12), wobei auf dem Tiefboxenboden (22) wenigstens eine Tiefboxeneinlage (20) nach einem der vorangehenden Ansprüche angeordnet ist und ein von dem Tiefboxenboden (22) und der Tiefboxenumrandung (12) umgrenzter Tiefboxeninnenraum (24) wenigstens teilweise mit wenigstens eine Tiefboxeneinlage (20) im Wesentlichen vollständig überdeckendem Einstreumaterial (26) gefüllt ist.

8. Tiefbox nach Anspruch 7,
**dadurch gekennzeichnet,**
**dass** die Tiefboxenumrandung (12) einen Front-Umrandungsbereich (16) und einen Heck-Umrandungsbereich (14) umfasst, wobei bei in der Tiefbox (10) positioniertem Tier ein Bugbereich des Tiers im Bereich des Front-Umrandungsbereichs (16) positioniert ist, und wobei wenigstens eine Tiefboxeneinlage (20) nahe dem Front-Umrandungsbereich (16) positioniert ist,
oder/und
**dass** die Tiefboxenbodenumrandung (12) einen Front-Umrandungsbereich (16) und einen Heck-Umrandungsbereich (14) umfasst, und dass wenigstens eine Tiefboxeneinlage (20) in einer Tiefboxen-Längserstreckungsrichtung (L) zwischen dem Front-Umrandungsbereich (16) und dem Heck-Umrandungsbereich (14) eine Erstreckungslänge von 40 % bis 80 %, vorzugsweise etwa 55 %, der Erstreckungslänge des Tiefboxeninnenraums (24) in der Tiefboxen-Längserstreckungsrichtung (L) aufweist.

9. Tiefbox nach einem der Ansprüche 7 oder 8,
**dadurch gekennzeichnet,**
**dass** die Tiefboxenbodenumrandung (12) einen Front-Umrandungsbereich (16) und einen Heck-Umrandungsbereich (14) umfasst, und dass im Wesentlichen quer zu einer zwischen dem Front-Umrandungsbereich (16) und dem Heck-Umrandungsbereich (14) orientierten Tiefboxen-Längserstreckungsrichtung (L) eine Mehrzahl von nebeneinander angeordneten Tierliegeplätzen in dem Tiefboxeninnenraum (24) jeweils mit wenigstens einer Tiefboxeneinlage (20) vorgesehen ist,
oder/ und
**dass** der erste Einlagekörper (28) in seinem von dem Front-Umrandungsbereich (16) entfernten Endbereich eine abnehmende Dicke aufweist, und dass der zweite Einlagekörper (30) durch Verformung an die abnehmende Dicke des ersten Einlagekörpers (28) angepasst ist, vorzugsweise wobei der zweite Einlagekörper (30) eine im Wesentlichen gleichmäßige Dicke von seinem dem Front-Umrandungsbereich (16) nahe liegenden Endbereich zu seinen von dem Front-Umrandungsbereich (16) entfernten Endbereich aufweist.

10. Tiefbox nach einem der Ansprüche 7-9,
**dadurch gekennzeichnet, dass** in dem Tiefboxeninnenraum (24) auf wenigstens eine Tiefboxeneinlage (20) folgend eine von dem Einstreumaterial (26) im Wesentlichen vollständig überdeckte Tiefboxenanschlusseinlage (62) vorgesehen ist.

11. Tiefbox nach Anspruch 10,
**dadurch gekennzeichnet,**
**dass** die Tiefboxenanschlusseinlage (62) wenigstens einen Anschlusseinlagekörper (64; 74, 76) umfasst, wobei in dem Anschlusseinlagekörper (64; 74, 76) eine Mehrzahl von wenigstens zu einer vom Tiefboxenboden (22) abgewandten Oberseite (68) der Tiefboxenanschlusseinlage (62) offenen Füllmaterial-Aufnahmeaussparungen (70) vorgesehen ist,
oder/und
**dass** wenigstens ein Teil der, vorzugsweise alle Füllmaterial-Aufnahmeaussparungen (70) wenigstens teilweise, vorzugsweise vollständig, mit Füllmaterial (72), vorzugsweise körnigem Füllmaterial, gefüllt ist.

12. Tiefbox nach Anspruch 11,
**dadurch gekennzeichnet,**
**dass** das der Anschlusseinlagekörper (64; 74, 76) zum Bereitstellen der Füllmaterial-Aufnahmeaussparungen (70) mit wabenartiger Struktur ausgebildet ist,
oder/und
**dass** die Tiefboxenanschlusseinlage (62) einstückig ausgebildet ist, oder/und
**dass** die Tiefboxenanschlusseinlage (62) einen auf dem Tiefboxenboden (22) aufliegenden ersten Anschlusseinlagekörper (74) und einen über dem ersten Anschlusseinlagekörper (74) angeordneten und die Oberseite (68) der Tiefboxenanschlusseinlage (62) bereitstellenden zweiten Anschlusseinlagekörper (76) umfasst.

13. Tiefbox nach Anspruch 11 oder 12,
**dadurch gekennzeichnet, dass** wenigstens ein Teil wenigstens eines Anschlusseinlagekörpers (74, 76) wenigstens teilweise mit einer Tiefboxeneinlage (20) einstückig ausgebildet ist.

14. Tiefbox nach einem der Ansprüche 10, sofern auf Anspruch 8 rückbezogen,
**dadurch gekennzeichnet, dass** die Tiefboxenanschlusseinlage (62) den zwischen dem Heck-Umrandungsbereich (14) und einer im Tiefboxeninnenraum (24) angeordneten Tiefboxeneinlage (20) gebildeten Zwischenraum in Richtung von der Tiefboxeneinlage (20) zu dem Heck-Umrandungsbereich (14) im Wesentlichen vollständig überdeckt.

15. Tiefbox nach einem der Ansprüche 10-14,
**dadurch gekennzeichnet, dass** die Tiefboxenanschlusseinlage (62) wenigstens bereichsweise elastisch verformbar ist, oder/und dass die Tiefboxenanschlusseinlage (62) wenigstens bereichsweise mit vorzugsweise durch Recycling gewonnenem Gummigranulat aufgebaut ist.
